# EUROPEAN PATENT SPECIFICATION

(11) **EP 3 938 697 B1**
(45) Date of publication and mention of the grant of the patent: **09.08.2023**
(21) Application number: 19712710.3
(22) Date of filing: 14.03.2019
(51) Int. Cl.: F17C 3/04, F17C 3/08, F17C 9/02, F17C 13/12

(54) **A FUEL TANK ARRANGEMENT IN A MARINE VESSEL AND A METHOD OF RELIEVING HYDROGEN FROM A LIQUID HYDROGEN FUEL TANK ARRANGEMENT**
BRENNSTOFFTANKANORDNUNG IN EINEM SCHIFF UND VERFAHREN ZUM ABLASSEN VON WASSERSTOFF AUS EINER FLÜSSIGWASSERSTOFFBRENNSTOFFTANKANORDNUNG
AGENCEMENT DE RÉSERVOIR DE CARBURANT DANS UN VÉHICULE MARIN ET PROCÉDÉ DE DÉGAZAGE D'HYDROGÈNE À PARTIR D'UN AGENCEMENT DE RÉSERVOIR DE CARBURANT À HYDROGÈNE LIQUIDE

(43) Date of publication of application: 19.01.2022
(73) Proprietor: Wärtsilä Finland Oy, 65100 Vaasa (FI)
(72) Inventor: VESTBØSTAD, Lars, 5412 Stord (NO); NORDTUN, Terje, 5412 Stord (NO)
(74) Representative: Genip Oy
(86) International application number: PCT/EP2019/056375
(87) International publication number: WO 2020/182308

(56) References cited:
- WO-A1-2004/111525
- WO-A1-2015/040267
- WO-A1-2018/141411

## Description

### Technical field

The present invention relates to a fuel tank arrangement in a marine vessel for storing liquid hydrogen and a method of relieving hydrogen from a liquid hydrogen fuel tank arrangement. More particularly, the present invention relates to such a liquid hydrogen fuel tank arrangement that the tank comprises at least two shells, a heat insulation therebetween and a tank connection space arranged at an end or at a side of the liquid hydrogen fuel tank.

### Background art

In recent years long-lasting studies of the use of LH₂ (Liquid Hydrogen) as fuel for both marine, land borne and airborne applications where the LH₂ is used either in an internal combustion engine, in a fuel cell or in a rocket motor have been performed.

The fuel tank arrangement for liquid hydrogen comprises the same basic elements as a tank arrangement for liquefied natural gas (LNG), i.e. the fuel tank itself and a tank connection space. The tank connection space is normally a gas tight enclosure constructed of materials resistant to cryogenic temperature and containing all tank connections, fittings, flanges and tank valves. In other words, it houses equipment needed for both filling or bunkering the fuel tank and treating or processing the fuel before it is taken to the end use, i.e., in the case of LNG, to the internal combustion engine. The tank connection space comprises further means for inerting the interior of the tank connection space and a connection to the outside atmosphere or open air via a vent mast. The tank connection space (TCS) is not normally accessible, it may not be entered by personnel unless checked for sufficient oxygen and absence of explosive atmosphere.

In document WO 2015/040267 A1 by WARTSILA FINLAND OY it is disclosed a fuel tank arrangement in a marine vessel suitable for storing liquid hydrogen, the fuel tank arrangement comprising:
- a fuel tank suitable for storing liquid hydrogen having a gas space,
- a tank connection space, which is arranged in communication with the liquid hydrogen fuel tank, the tank connection space being provided with:
   • connections for taking liquid hydrogen from the fuel tank,
   • evaporator for evaporating the liquid hydrogen,
   • connections for feeding the evaporated hydrogen as a fuel to a hydrogen consuming power unit,
   • a ventilation inlet line,
   • a vent mast having a lower end and an upper end, and an interior, the interior of the vent mast forming a ventilation outlet line for discharging gas from the tank connection space.

However, for various reasons both the fuel tank and the tank connection space used for storing and handling liquid hydrogen require specific attention. Firstly, hydrogen storage and processing in general imply high risk of fire and explosion due to, on the one hand, the wide range of mixture giving explosive atmosphere and, on the other hand, the low ignition energy typical to hydrogen. Secondly, the detection of hydrogen is relatively slow.

For solving the above two problems an inerted tank connection space where also oxygen and/or nitrogen concentration is monitored would appear to be the most realistic solution to obtain necessary safety on ships using hydrogen as their fuel, considering the reliability and energy consumption of the safety system. In other words, it is a well-known fact that if both hydrogen concentration and oxygen concentration are above certain critical levels there is a risk of hydrogen explosion. Thus, if the oxygen concentration in the tank connection space is kept below its critical level or the nitrogen concentration is kept so high that the hydrogen concentration and oxygen concentration cannot exceed their critical levels simultaneously there is no risk of hydrogen explosion. For inerting the tank connection space, nitrogen is readily available, and can be bunkered more or less anywhere.

However, as an additional feature requiring specific attention is the molecule size of hydrogen that makes the hydrogen prone to leak from pressurized piping systems. Due to leaking tendency of the hydrogen the liquid hydrogen fuel tank itself is a double-walled tank provided with a heat insulation between the tank shells. The term 'heat insulation' covers here providing the cavity between the shells either with, for instance, perlite insulation or with vacuum or both in combination. Also, to be able to maintain a safe atmosphere in the tank connection space it is necessary either to continuously remove hydrogen from the space where the piping system is located, or, alternatively, the surroundings should be kept at a higher pressure level than the piping system.

A still further problem in liquid hydrogen systems is the temperature of the hydrogen gas that has to be removed to the outside atmosphere. This kind of a problem is at hand when the emergency pressure relief valve from the liquid hydrogen tank opens. Temperatures below 50K set specific requirements to the equipment handling the gas.

Thus, an object of the present invention is to design such a liquid hydrogen fuel tank arrangement for a marine vessel that solves at least one of the above mentioned problems.

Another object of the present invention is to design a liquid hydrogen fuel tank arrangement for a marine vessel wherein the tank connection space of the tank arrangement may be continuously purged whenever the tank connection space is closed.

Yet another object of the present invention is to design a liquid hydrogen fuel tank arrangement for a marine vessel wherein the purging of the tank connection space may be controlled by measuring the hydrogen/oxygen/nitrogen level in the tank connection space.

A further object of the present invention is to design such a liquid hydrogen fuel tank arrangement that the tank connection space thereof is provided with a vent mast for ventilation outlet, the vent mast being provided with means for taking into account the temperature of the hydrogen gas.

A still further object of the present invention is to design such a liquid hydrogen fuel tank arrangement that the mast is provided with means for preventing the hydrogen gas from igniting by arranging inert atmosphere at the mast and especially at the outlet or upper end of the mast.

### Disclosure of the Invention

At least one object of the present invention is substantially met by a fuel tank arrangement in a marine vessel for storing liquid hydrogen, the fuel tank arrangement comprising a liquid hydrogen fuel tank having a gas space, a tank connection space, which is arranged in communication with the liquid hydrogen fuel tank, the tank connection space being provided with connections for filling the fuel tank with liquid hydrogen, connections for taking liquid hydrogen from the fuel tank, an evaporator for evaporating the liquid hydrogen, connection for feeding the evaporated hydrogen as a fuel to a hydrogen consuming power unit, a ventilation inlet line, a vent mast having a lower end and an upper end, and an interior, the interior of the vent mast forming a ventilation outlet line for discharging gas from the tank connection space, an emergency pressure relief valve coupled via a safety valve line between the gas space of the fuel tank and the vent mast, a connection to an inert gas source for inerting the tank connection space, wherein a first hydrogen outlet line provided in the vent mast separate from the ventilation outlet line, the first hydrogen outlet line extending from the lower end of the vent mast to the upper end thereof and being arranged in flow communication with the emergency pressure relief valve.

At least one object of the present invention is substantially also met by a method of relieving cold gaseous hydrogen from a liquid hydrogen fuel tank arrangement of any one of the preceding claims, the method comprising, when the emergency pressure relief valve opens and allows hydrogen bleed in the first hydrogen outlet line, the steps of
a) opening the at least one ventilation outlet valve,
b) opening a flow communication from the high capacity nitrogen system to the tank connection space,
c) allowing the nitrogen flow along the ventilation outlet line to the upper end of the vent mast,
d) discharging hydrogen from the first hydrogen outlet line into nitrogen atmosphere surrounding the upper end of the first hydrogen outlet line.

Other characteristic features of the present invention become apparent in the appended dependent claims.

The fuel tank arrangement of the present invention offers at least some of the following advantages:
- continuous purging of the tank connection space by nitrogen, whereby
- risk of ignition or explosion of hydrogen is avoided,
- mechanical stresses to equipment handling hydrogen gas are minimized,
- hydrogen discharge from the vent mast after opening of the emergency pressure relief valve of the hydrogen fuel tank is performed safely in nitrogen atmosphere.

### Brief Description of Drawings

In the following, the present invention will be described in more detail with reference to the accompanying exemplary, schematic drawings, in which
Figure 1 illustrates schematically a side view of a marine vessel having a liquid hydrogen fuel tank of the present invention on the deck thereof,
Figure 2 illustrates schematically a longitudinal cross-section of a liquid hydrogen fuel tank in accordance with a first preferred embodiment of the present invention, and
Figure 3 illustrates schematically an enlarged cross section of the vent mast in accordance with a preferred embodiment of the present invention.

### Detailed Description of Drawings

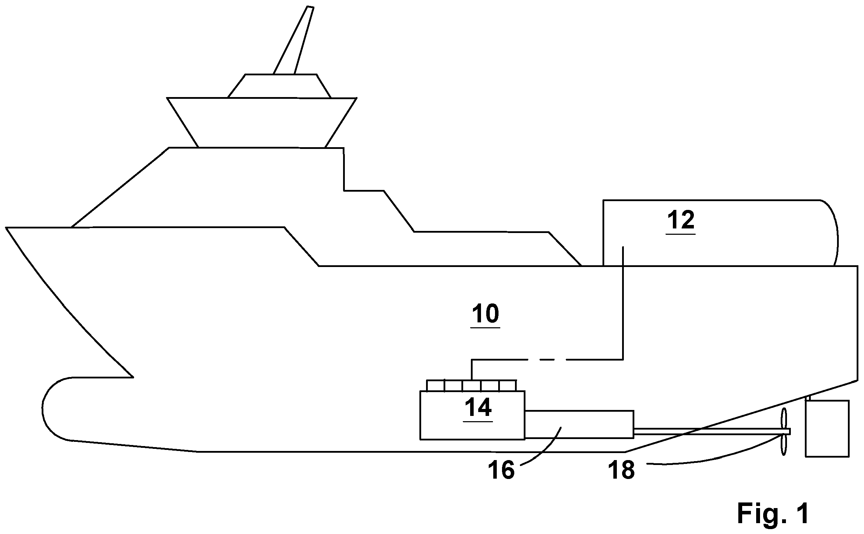

Figure 1 illustrates schematically and in a very simplified manner a marine vessel 10 with a liquid hydrogen fuel tank arrangement 12 in accordance with a first preferred embodiment of the present invention provided on the deck thereof. Naturally, the liquid hydrogen fuel tank may also be positioned below the deck. The Figure shows also an internal combustion engine 14, a fuel cell, or any other energy conversion device using hydrogen, in broader terms, power unit, receiving fuel from the liquid hydrogen fuel tank arrangement 12 and the drive means 16 coupled to both the fuel cell/internal combustion engine/power unit and the propeller 18. However, it should be noted that the propulsion system may, naturally, be of any known type. The drive means may here comprise either a mechanical gear or a generator - electric drive combination.

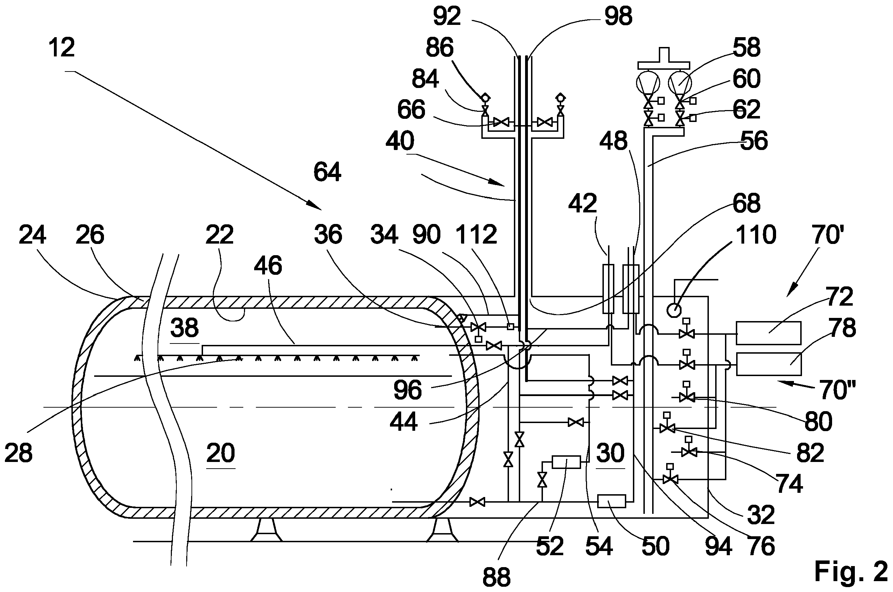

Figure 2 illustrates in a more detailed but still in a schematic and simplified manner a longitudinal cross-section of a liquid hydrogen fuel tank arrangement 12. The fuel tank arrangement is composed of a liquid hydrogen fuel tank 20 and a tank connection space 30. The fuel tank 20 is, as an example, formed of an inner shell 22, an outer shell 24 and a cavity 26 therebetween, the cavity 26 being provided with vacuum or reduced pressure and/or filled with, for instance, a multilayer insulation or a perlite insulation. At an end of the fuel tank 20 a so called tank connection space 30, is arranged. Naturally, the tank connection space may as well be located at a side of the liquid hydrogen fuel tank, and not necessarily as an extension of the shell of the tank but also at a distance from the shell of the tank, i.e. as a separate chamber at a side or at an end of the liquid hydrogen fuel tank, or even above the tank. The tank connection space 30 is normally of a single-shell structure 32, though also a double-shell structure may be used.

The tank connection space 30 houses normally at least one emergency pressure relief valve 34, which opens a vent connection along a safety valve line 36 from the top or gas space 38 of the liquid hydrogen fuel tank 20 along the vent mast 40 to the outside atmosphere or open air in case pressure in the liquid hydrogen tank 20 exceeds a predetermined value. It is also possible that the pressure relief valve itself fails and starts leaking even if the pressure in the tank is below the predetermined value. The tank connection space 30 also houses connections for filling or bunkering the fuel tank 20, here shown as a line 42 leading from outside the tank connection space 30 first inside the tank connection space and branching there both via line 44 to the bottom of the tank 20 and via line 46 to the sprays 28 in the fuel tank 20. It is also an alternative to only have the top filling using the sprays. The sprays 28 are positioned in the gas space 38 of the liquid hydrogen fuel tank 20. The tank connection space 30 further houses means for providing the power unit, i.e. the internal combustion engine or fuel cell, with the fuel it needs, shown as a line 48 and an evaporator 50 for evaporating the liquid fuel to gaseous state to be fed via a fuel valve unit (not shown) to the internal combustion engine or fuel cell, in broader terms, power unit. Further, the tank connection space houses a pressure build-up unit 52 for evaporating and feeding gaseous evaporated hydrogen along line 54 to the gas-space of the liquid hydrogen fuel tank 20 in order to maintain the pressure in the tank 20 in its desired range. The pressure build-up unit 52 may be replaced with a pump in line 48 leading to the evaporator 50. In addition to the above mentioned equipment, the tank connection space 30 further includes a standard ventilation equipment including an air or ventilation inlet line 56 with at least one fan or blower 58, at least one fire damper valve 60, at least one air supply shut-off valve 62 and a ventilation outlet line 64 with at least one ventilation outlet valve 66, the ventilation outlet line 64 leading from the interior of the tank connection space 30 to the atmosphere along the vent mast 40. As to the fans it should be understood that the fans may also be extraction fans drawing gas from the gas connection space. In such a case the fan and the closing valve are arranged in parallel with the ventilation outlet valve 66. Also, sometimes it may be sufficient to have only one fire damper valve or one air supply shut-off valve, i.e. both valves may not be needed at all. However, in any case, there has to be at least one fire damper valve or one air supply shut-off valve for closing the ventilation inlet line 56 whenever needed. Actually, the open interior of the vent mast 40 forms the ventilation outlet line 64. The ventilation outlet valve 66 is designed to be open when purging nitrogen for fire prevention at the mast outlet, when relieving the pressure during inerting of the tank connection space 30 and when ventilation fans 58 are running.

All the above discussed components and equipment of fuel tanks are, in practice, known from prior art LNG- fuel tanks. However, as already mentioned earlier the use of liquid hydrogen sets further requirements to both the fuel tank 20, the tank connection space 30 and the ventilation equipment, especially the vent mast 40, provided in connection therewith. In brief, the explosion tendency, the small molecule size that inevitably leads to hydrogen leaking to some extent, and the low temperature of the leaked hydrogen gas require significant improvements in the fuel tank arrangement and the equipment arranged in connection therewith.

Some already known equipment like the ventilation inlet line 56 and the ventilation outlet line 64 are positioned and constructed in a specific manner to take into account the properties of gaseous hydrogen, i.e. the lightness as well as the temperature thereof. In other words, the ventilation inlet line 56 is brought or extended down to the bottom of the tank connection space 30 so that the ventilation gas, preferably, but not necessarily, air or nitrogen, both being heavier than hydrogen gas, is, in this invention, introduced to the bottom of the tank connection space to flush any hydrogen gas leaked from the hydrogen components at the bottom of the tank connection space to the upper part of the tank connection space. The mechanism how the flushing works is as follows: leaking hydrogen is buoyant and will start to rise inside the tank connection space. If ventilation air was added at the top of the tank connection space, it would mix with the hydrogen, dilute it and distribute it inside the volume of the tank connection space. In such a case it will take more time to vent out the hydrogen and it would also be more difficult to detect it as it will be diluted. When air/nitrogen is added at the bottom it will contribute to the upwards flow of the hydrogen gas inside the tank connection space and by that venting out the hydrogen is more efficient. For the same reason the ventilation outlet line 64 is arranged to have its inlet opening 68 at the uppermost part, i.e. at the top of the tank connection space 30 so that, in practice, all hydrogen may be discharged from or forced out of the tank connection space 30. The inlet opening 68 may also be considered as the lower end of the vent mast 40.

A first measure taken to ensure the safety of the liquid hydrogen fuel tank arrangement 12 is that a redundant nitrogen system is connected to the tank connection space 30. The nitrogen system 70 comprises one high capacity system 70' used during the initial inerting process in order to replace the oxygen atmosphere, and one low capacity system 70" used during normal operation to maintain the overpressure and allow for small exchange of the atmosphere, the latter being dimensioned in accordance with the expected leak rate. The high capacity system comprises a first nitrogen source 72 from which nitrogen is introduced via valve 74 or valve 76 to the tank connection space 30 to bring the oxygen level in the tank connection space 30 down to a safe concentration level. The low capacity system comprises a second nitrogen source 78 from which, during normal operation, nitrogen is supplied and bled via a valve 80 or valve 82 at the same rate as or higher rate, for instance 125%, of the expected leak rate of hydrogen in the tank connection space 30. This expected leak rate is defined to be the sum of all possible detectable leak rates from all fittings and connections inside the tank connection space 30. However, the actual leak rate will, in practical cases, be less than the expected leak rate. Thus there is a potential to save a lot of nitrogen by spending some time to find out what the leak rate actually is. The actual leak rate is found by leaving the nitrogen supply closed and monitoring how the hydrogen level in the tank connection space develops over time. However, for safety reasons the maximal design capacity of the purging system should be such that is above discussed. As is apparent from the above and from Figure 2 nitrogen may be introduced from both sources either directly into the tank connection space 30 (valves 74 and 80) or via the ventilation inlet line 56 (valves 76 and 82) to the bottom of the tank connection space 30. Naturally, if desired, nitrogen may be introduced from one or both sources both directly to the tank connection space 30 and via a ventilation inlet line 56 to the bottom of the tank connection space 30. And finally it should be understood that the first and the second nitrogen sources may, in fact, be a single nitrogen storage vessel from which nitrogen is taken via appropriate valves to both high and low capacity systems. A further option, in case redundancy is required, is to provide two nitrogen storage vessel from which nitrogen is taken via appropriate valves to both high and low capacity systems.

The nitrogen pressure in the tank connection space 30 and "hydrogen purge" flow can be secured by flow control valves on at least one of the nitrogen supply lines, or by pressure control at the outlet of the ventilation line - either using self-regulating valves or pressure transmitters and valves actuated thereby.

For the purpose of inspection, repair and maintenance, the tank connection space has a mechanical ventilation system with a capacity to keep the hydrogen concentration at a desired level based on the aforementioned expected leak rate and to ensure a sufficient oxygen atmosphere in the tank connection space 30 when personnel have to attend the space. When personnel have to enter the tank connection space 30, for the purpose of inspection, repair or maintenance the starting situation is normally such that the tank connection space 30 is receiving nitrogen from the low capacity system at a rate sufficient for keeping the hydrogen level low enough. For ensuring a sufficient oxygen atmosphere in the tank connection space 30, air is sucked from atmosphere into the ventilation inlet line 56 by the at least one air supply fan 58 and introduced through the at least one fire damper valve 60 and the at least one air supply shut-off valve 62 to the tank connection space 30. In the tank connection space 30 the ventilation inlet line 56 is directed or extended down to the bottom of the tank connection space 30 to ensure an upwards air flow in the tank connection space. As hydrogen is very light, this will ensure that all hydrogen leaked in the tank connection space 30 will follow the air stream to the upper part of the tank connection space 30. The ventilation outlet line 64 has its inlet opening 68 at the highest point inside, i.e. at the top of, the tank connection space 30 and leads along the vent mast 40 and via the at least one closing valve 84 and the pressure/vacuum valve 86 to open air. Normally the inerting gas flows from the tank connection space through closing valve 84 and the pressure/vacuum valve 86 to open air. The valve 66 is only open for the high capacity inerting or for ventilating by air. A further property of the pressure/vacuum valve 86 is to prevent ingress of air in the vent mast 40 and tank connection space 30.

After the personnel have finished their maintenance or repair work, the oxygen level in the tank connection space 30 has to be brought down to prevent the risk of explosion in case the hydrogen level starts to increase, i.e. the tank connection space 30 has to be inerted. The same kind of inerting has to be performed before raising the oxygen concentration for tank connection space maintenance if it is detected that the hydrogen level is, for some reason, raised above a safe value. Thus, when the tank connection space 30 needs to be inerted, the at least one ventilation inlet fan 58 is stopped, and the high capacity nitrogen system is activated, i.e. the first nitrogen source 72 is opened through the inerting valves 74 and/or 76. Then the at least one ventilation inlet closing valve 62 and the at least one ventilation outlet valve 66 are closed until the pressure inside the tank connection space 30 reaches the design pressure for the tank connection space. Next the valves (62 and 66) are opened until the pressure in the tank connection space 30 is relieved. Then the valves 62 and 66 are closed again until the design pressure of the tank connection space 30 is again reached. Next the valves 62 and 66 are again opened to relieve the pressure, and so on. This is repeated until the desired nitrogen concentration in the tank connection space 30 is reached. Number of required cycles is calculated based on the volume of the tank connection space 30, and the pressure to which the tank connection space can be charged.

When the desired nitrogen concentration in the tank connection space 30 is reached the at least one fire damper valve 60, the at least one ventilation inlet shut-off valve 62, the at least one ventilation outlet valve 66 and the inerting valves 74 and 76 are closed, and the at least one closing valve 84 leading to at least one pressure/vacuum valve 86 is opened together with nitrogen purging supply valves 80 and/or 82 of the low capacity nitrogen system 70". The closing valve 84 may be kept open all the time, except if the pressure/vacuum valve 86 needs to be repaired or removed. The pressure/vacuum valve 86 has two functions, i.e. on the one hand, the valve 86 when there is a certain vacuum in the ventilation outlet line 64, whereby ambient air is allowed in the outlet line 64, or on the other hand, the valve 86 opens when there is a certain over pressure in the ventilation outlet line 64, whereby pressure in the outlet line is allowed to relieve in open air. A single pressure/vacuum valve 86 may be replaced with two valves positioned in a single unit, where one valve opens on pressure and another on vacuum. The at least one pressure/vacuum valve 86 and the nitrogen purging valves 80 and 82 will be matched together to ensure that a certain overpressure is maintained in the tank connection space 30, with a nitrogen exchange flow dimensioned based on the expected hydrogen leak rate as stated above. Preferred solution is that purging valve assembly, i.e purging valves 80 and/or 82 and the at least one pressure/vacuum valve 86, ensures a constant supply rate. If there is automation controlling the nitrogen supply, the detectors/transmitters 110 will also be part of the assembly. Thereby the at least one pressure/vacuum valve 86 ensures a constant over pressure in the tank connection space 30.

Due to specific requirements involved in the handling of liquid hydrogen in connection with fuel tank arrangements, related primarily to the amount of hydrogen to be handled and secondarily to the temperature of hydrogen in its various handling phases, the vent mast 40 needs to be designed to take into account those specific circumstances. There are basically two different types of hydrogen that need to be discharged to open air. The first hydrogen type is the cold or low temperature (liquid) hydrogen that may be received for instance via the emergency pressure relief valve 34 from the tank 20, from the lines 42, 44 and 46 used for filling the tank 20, from the line 88 leading liquid hydrogen to the evaporator 50, from the line 54 leading evaporated hydrogen from the pressure build-up unit 52 to the fuel tank 20 or from the line 90 leading hydrogen from the cavity 26 between the shells 22 and 24 of the liquid hydrogen tank 20. Sometimes it is needed to discharge cold hydrogen from the evaporator 50 to the first hydrogen outlet line 92, too. All these flows may be combined to the first hydrogen outlet line 92 though one or more of the flows may be taken via separate lines to the atmosphere. In other words, in the first hydrogen type it is a question of "unlimited" amounts of hydrogen, whereas the second hydrogen type relates to limited amounts of hydrogen, i.e. various limited leaks, bleeds, equipment purging etc. The second hydrogen type is, thus, in practice, warmer gaseous hydrogen that may be collected from line 94 after the evaporator 50 or from line 96 returning from the power unit to a second hydrogen outlet line 98. Also hydrogen that leaks in the tank connection space 30 from pipes, fittings and equipment in the tank connection space 30, and cannot be collected as pure hydrogen belongs to the second type of hydrogen, i.e. to hydrogen the volume flow of which is small, i.e. a fraction of that of the first hydrogen type. The reason why the two types of hydrogen are preferably taken to separate discharge lines in the vent mast is that the vents from high volumes of hydrogen cannot even accidentally flow into the lines aimed at handling smaller amounts of hydrogen. Without this safety feature, for instance, hydrogen leaking via the emergency pressure relief valve from the tank could flow in opposite direction along such a line that is open, for instance for maintenance, to the interior of the tank connection space. The two types of hydrogen may, however, be connected to a single discharge line if the above mentioned risks and problems are taken into account in the system design. The vent or the leakage flow from the tank connection space 30 has a temperature close to ambient as the small leaked amount of hydrogen is mixed with the nitrogen present in the tank connection space, whereas the temperature of the hydrogen discharged via the safety valve is close to 20K. Therefore the vent mast 40 comprises an outer pipe 100 and two outlet lines, i.e. a first hydrogen outlet line 92 for the cold or low temperature hydrogen and a second hydrogen outlet line 98 for the warm hydrogen, running inside the outer pipe 100, i.e. separate from the ventilation outlet line 64. The first and the second hydrogen outlet lines 92 and 98 are, thus, surrounded by the ventilation outlet line 64 and, naturally, the outer pipe 100, too. The interior of the outer pipe 100 forms the ventilation outlet line 64, which takes care of ventilating the hydrogen leaked into the tank connection space 30 to open air as well as the nitrogen introduced into the tank connection space 30. Both the outer pipe 100 and the two lines 92 and 98 therein are, however, designed of materials capable of being used in very low temperatures, of the order of 20K. In use, the temperature of the first hydrogen outlet line 92 discharging hydrogen from the tank 20 is close to 20K, whereas the second hydrogen outlet line 98 and the outer pipe 100 are significantly warmer. Furthermore, specific attention has to be paid not only to the first hydrogen outlet line 92 but also to the design of the vent mast as a whole, especially at positions where the vent mast 40 is penetrating decks and bulkheads. Both the first hydrogen outlet line 92 and the outer pipe 100 have to be designed for the low temperatures, whereby the first hydrogen outlet line 92 may be supported to the outer pipe 100 in locations between the deck and bulkhead penetrations. In that way thermal impacts from a blow off from the tank emergency pressure relief valve 34 to the deck penetration are prevented.

In order to further prevent such thermal impact, a temperature sensor 112 is arranged on the outer surface of the safety valve line 36 or that of the first hydrogen outlet line 92 before the outlet line 92 leaves the tank connection space 30. Another location for the temperature sensor could also be on the outlet line 92 just downstream of the connection of line 90 to the outlet line 92, as the flow in line 90 will be cold and may be significant. Alternatively there may be one temperature sensor on safety valve line 36 (as shown in Figure 2) and one on line 90. Then the origin of the cold flow may be detected. When temperature information from the sensor 112 is registered, the temperature value is a good indication of the amount of hydrogen that flows in the safety valve line, i.e. the lower is the temperature value the higher is the flow. If there is a significant release of hydrogen via the tank emergency pressure relief valve 34, it will, thus, be detected, as the temperature value is below a predetermined value, whereby the start of feeding nitrogen at ambient temperature to the tank connection space 30 through the nitrogen supply valves 74, 76, 80 and/or 82 may be initiated. Thereby such a nitrogen flow along the ventilation outlet line 64 is established that further reduces the cold impact from the first hydrogen outlet line 92, i.e. the "warm" nitrogen flow in the ventilation outlet line 64 heats the first hydrogen outlet line 92 and prevents efficiently the cooling of the outer pipe 100. While the nitrogen supply in the tank connection space 30 is started the shut-off valve 66 to relieve the ventilation flow is opened.

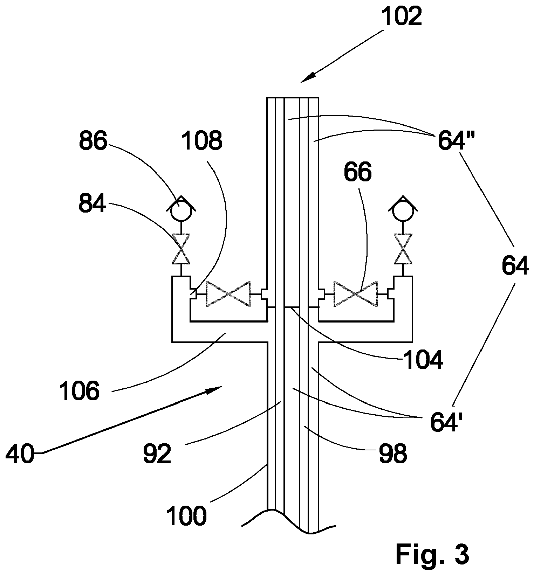

As to the vent mast 40 (see especially Figure 3) and the various flow paths therein, it should be understood that both the first hydrogen outlet line 92 and the second hydrogen outlet line 98 extend all the way from inside the tank connection space 30 to the open air at the upper end 102 of the top of the vent mast 40. However, the ventilation outlet line 64, i.e. in practice the outer pipe 100 of the vent mast 40 is provided with a closure plate 104, which prevents direct ventilation outlet flow along the ventilation outlet line 64 to the upper end 102 of the vent mast 40. The closure plate 104 divides the ventilation outlet line 64 to a lower part 64' and an upper part 64". Both the first hydrogen outlet line 92 and the second hydrogen outlet line 98 penetrate the closure plate 104 without any obstruction to the flows in the lines. At least one branch pipe 106 is provided below the closure plate 104 to the outer pipe 100 so that the ventilation outlet flow may proceed from the lower part 64' of the ventilation outlet line 64 along the at least one branch pipe 106. The at least one branch pipe 106 is provided with a connection 108 and a ventilation shut-off valve 66 therein for providing a flow path back to outer pipe 100 and to the upper part 64" of the ventilation outlet line 64 above the closure plate 104. The at least one branch pipe 106 is further provided with a closing valve 84 and a pressure/vacuum valve 86.

The first hydrogen outlet line 92 from the at least one emergency pressure safety relief valve 34 has to be brought to open air to a position in compliance with actual rules and to the satisfaction of authorities and class. This line 92 is also used for venting out hydrogen from bleed valves in pipe segments and from other safety valves elsewhere in the liquid hydrogen piping. The relief flow from the tank 20 and from other piping for liquid hydrogen is cold and dense, while the relief from hydrogen gas piping will be more buoyant. At certain scenarios a high flow is relieved from the tank safety valves 34 though the safety valve line 36. Such a relief flow is cold. Since there is a temperature sensor 112 on the outer surface of the safety valve line 36 or that of the first hydrogen outlet line 92 inside the tank connection space 30, such a scenario is detected (by the combination of the temperature together with the pressure in the tank 20). Such scenarios include, for instance, fire exposure to the tank 20 or loss of vacuum in the annular space 26 between the shells 22 and 24 of the tank 20. Due to the low energy required to ignite hydrogen it has to be expected that under these circumstances the hydrogen easily ignites at the outlet or upper end 102 of the vent mast 40 or that of the first hydrogen outlet line 92 simply due to the friction at the outlet in the presence of oxygen.

In accordance with a further preferred embodiment of the present invention the ventilation flow from the tank connection space 30 is arranged along a ventilation outlet line 64, which, at the upper end of the first hydrogen outlet line 92 surrounds the first hydrogen outlet line 92. In accordance with a first variation of the present invention, when the pressure in the tank 20 exceeds a predetermined value, the emergency pressure relief valve 34 opens and allows gaseous hydrogen bleed in the first hydrogen outlet line 92. The opening of the emergency pressure relief valve 34 opens a flow communication from the high capacity nitrogen system 70' to the tank connection space 30 via at least one of the nitrogen supply valves 74 and 76, and also the ventilation outlet valves 66 are opened, allowing the content of the ventilation outlet line 64 to flow out around the outlet of the first hydrogen outlet line 92. By doing this, the oxygen is removed from around the outlet of the first hydrogen outlet line 92, the discharge of hydrogen takes place in nitrogen atmosphere and the expected fire can be prevented, suppressed or extinguished. One additional feature is that the hydrogen released at the mast, in the outlet line 92, will have higher temperature and thus be more buoyant than without the nitrogen supply. This will affect how the hydrogen clouds develop, and thereby the risk of spread-out of hydrogen downwards and sideways is reduced. The hydrogen will also leave the mast as a hydrogen/nitrogen mix, and it will take time before oxygen gets access to the hydrogen - and at that time the hydrogen and oxygen are well away from possible ignition sources onboard the ship.

In accordance with a somewhat more sophisticated variation of the present invention, when it is detected that the tank pressure is in the range of the setting of the safety valve 34, i.e. the pressure in the tank 20 exceeds a predetermined value, and the temperature in the safety valve line 36 or in the first hydrogen outlet line 92 is below a predetermined value, flow communication from the high capacity nitrogen system 70' to the tank connection space 30 is opened via at least one of the nitrogen supply valves 74 and 76, and also the ventilation outlet valves 66 are opened, allowing the content of the ventilation outlet line 64 to flow out around the outlet of the first hydrogen outlet line 92. By doing this, the oxygen is removed from around the outlet of the first hydrogen outlet line 92, the discharge of hydrogen takes place in nitrogen atmosphere and the expected fire can be prevented, suppressed or extinguished.

In addition to what has so far being discussed the nitrogen sources may also be coupled to purge the outlet means used for taking gaseous hydrogen from the tank connection space 30 to the power unit, i.e. the internal combustion engine or fuel cell, and/or the inlet means bringing liquid hydrogen inside the tank connection space 30 for bunkering the fuel tank 20. Both the outlet and inlet means are provided with an outer pipe surrounding the actual hydrogen line, whereby nitrogen may be used for flushing the cavity between the hydrogen lines and the outer pipes or for maintaining the pressure in the cavity higher than the hydrogen pressure inside the lines 42 and 48.

In the above description the hydrogen, oxygen and nitrogen concentrations have been mentioned in several occasions. Though the present invention may manage without any detector system, the tank connection space 30 is, preferably, but not necessarily, provided with at least one of nitrogen sensor, oxygen sensor and hydrogen sensor. They are exemplarily referred to by a reference numeral 110. Thus, monitoring one or more of the three concentrations in real time makes the controlling of the purging or inerting operations easier and more economical as, for instance, the use of nitrogen may be reduced, and also the time needed for inerting may be reduced.

While the invention has been described herein by way of examples in connection with what are, at present, considered to be the most preferred embodiments of the present invention, it is to be understood that the invention is not limited to the disclosed embodiments, but is intended to cover various combinations or modifications of its features, and several other applications included within the scope of the invention, as defined in the appended claims. It should be understood that the tank arrangement comprises several features which are not shown in figures for the sake of clarity, for example, all such equipment present in each tank arrangement that concern fuel handling has been left out, as the present invention is not related fuel handling but features concerning inerting the tank connection space. The details mentioned in connection with any embodiment above may be used in connection with any other embodiment when such combination is technically feasible.

## Claims

1. A fuel tank arrangement for a marine vessel for storing liquid hydrogen, the fuel tank arrangement comprising
a) a liquid hydrogen fuel tank (20) having a gas space (38),
b) a tank connection space (30), which is arranged in communication with the liquid hydrogen fuel tank (20),
c) the tank connection space (30) being provided with
• connections (42, 44, 46) for filling the fuel tank (20) with liquid hydrogen,
• connections (88) for taking liquid hydrogen from the fuel tank (20),
• evaporator (50) for evaporating the liquid hydrogen,
• connections (94, 48) for feeding the evaporated hydrogen as a fuel to a hydrogen consuming power unit,
• a ventilation inlet line (56),
• a vent mast (40) having a lower end and an upper end (102), and an interior, the interior of the vent mast (40) forming a ventilation outlet line (64) for discharging gas from the tank connection space (30),
• an emergency pressure relief valve (34) coupled via a safety valve line (36) between the gas space (38) of the fuel tank (20) and the vent mast (40),
• a connection (74, 76; 80, 82) to an inert gas source (72; 78) for inerting the tank connection space (30),
wherein the fuel tank arrangement further comprises a first hydrogen outlet line (92) provided in the vent mast (40) separate from the ventilation outlet line (64), the first hydrogen outlet line (92) extending from the lower end of the vent mast (40) to the upper end (102) thereof and being arranged in flow communication with the emergency pressure relief valve (34).

2. The fuel tank arrangement as recited in claim 1, **characterized in** the first hydrogen outlet line (92) being surrounded by the ventilation outlet line (64).

3. The fuel tank arrangement as recited in claim 1 or 2, **characterized in** the first hydrogen outlet line (92) being arranged in flow communication with at least one of the line (44, 46) introducing liquid hydrogen to the fuel tank (20), the line (88) taking liquid hydrogen from the fuel tank (20) and the line (94) transferring gaseous hydrogen.

4. The fuel tank arrangement as recited in any one of the preceding claims, **characterized in** a second hydrogen outlet line (98) provided in the vent mast (40) separate from the ventilation outlet line (64) and the first hydrogen outlet line (92), the second hydrogen outlet line (98) extending from the lower end of the vent mast (40) to the upper end (102) thereof and being arranged in flow communication with at least one line (94) transferring gaseous hydrogen.

5. The fuel tank arrangement as recited in any one of the preceding claims, **characterized in** the vent mast (40) being provided with a closure plate (104) dividing the ventilation outlet line (64) in the vent mast (40) into a lower part (64') and an upper part (64").

6. The fuel tank arrangement as recited in claim 5, **characterized in** the vent mast (40) being provided with a branch pipe (106), the branch pipe (106) forming a flow connection from the lower part (64') of the ventilation outlet line (64) below the closure plate (104) to the upper part (64") thereof via a ventilation shut-off valve (64).

7. The fuel tank arrangement as recited in claim 6, **characterized in** the branch pipe (106) being provided with a closing valve (84) and a pressure/vacuum valve (86), the two valves (84, 86) being arranged in series and providing a flow connection from the branch pipe (106) and the lower part (64') of the ventilation outlet line (64) to open air.

8. The fuel tank arrangement as recited in any one of the preceding claims, **characterized in** a temperature sensor (112) provided on the first hydrogen outlet line (92) or on the safety valve line (36).

9. The fuel tank arrangement as recited in any one of the preceding claims, **characterized in that** the inert gas source (72; 78) belongs to a nitrogen system (70) comprising a high capacity nitrogen system (70') and a low capacity nitrogen system (70").

10. The fuel tank arrangement as recited in any one of the preceding claims, **characterized in** the fuel tank (20) being formed of two shells (22 and 24) and a cavity therebetween, the first hydrogen outlet line (92) being arranged in flow communication with the line (90) collecting hydrogen from the cavity (26) between the shells of the fuel tank (20).

11. The fuel tank arrangement as recited in any one of the preceding claims, **characterized in** the first hydrogen outlet line (92) being arranged in flow communication with the safety valve line (36) collecting hydrogen from the gas space (38) of the fuel tank (20) via the emergency pressure relief valve (34).

12. A method of relieving hydrogen from a liquid hydrogen fuel tank arrangement (12) of any one of the preceding claims, the method comprising, when the emergency pressure relief valve opens and allows hydrogen bleed in the first hydrogen outlet line (92), the steps of
a) opening the at least one ventilation outlet valve (66),
b) opening a flow communication from a high capacity nitrogen system (70') to the tank connection space (30),
c) allowing the nitrogen flow along the ventilation outlet line (64) to the upper end (102) of the vent mast (40),
d) discharging hydrogen from the first hydrogen outlet line (92) into nitrogen atmosphere surrounding the upper end of the first hydrogen outlet line (92).

13. The method as recited in claim 12, **characterized by** performing steps a), b) and c) simultaneously.

14. The method as recited in claim 12, **characterized by**, before step a), registering temperature information from a temperature sensor (112), and, in case the temperature is below a predetermined value, performing steps a) through d).

15. The method as recited in claim 12, **characterized by**, in step c), opening a flow communication via at least one of valves (74 and 76) to at least one of the ventilation inlet line (56) and the tank connection space (30).

## Patentansprüche

1. Kraftstofftankanordnung für ein Seeschiff zum Speichern von flüssigem Wasserstoff, wobei die Kraftstofftankanordnung Folgendes umfasst:
a) einen Kraftstofftank (20) für flüssigen Wasserstoff, der einen Gasraum (38) aufweist,
b) einen Tankanschlussraum (30), der in Verbindung mit dem Kraftstofftank (20) für flüssigen Wasserstoff angeordnet ist,
c) wobei der Tankanschlussraum (30) mit Folgendem versehen ist:
- Verbindungen (42, 44, 46) zum Befüllen des Kraftstofftanks (20) mit flüssigem Wasserstoff,
- Verbindungen (88) zum Entnehmen von flüssigem Wasserstoff aus dem Kraftstofftank (20),
- einem Verdampfer (50) zum Verdampfen des flüssigen Wasserstoffs,
- Verbindungen (94, 48) zum Einspeisen des verdampften Wasserstoffs als ein Kraftstoff in eine Wasserstoff verbrauchende Antriebseinheit,
- eine Lüftungseinlassleitung (56),
- einen Abblasemast (40), der ein unteres Ende und ein oberes Ende (102) und ein Inneres aufweist, wobei das Innere des Abblasemasts (40) eine Lüftungsauslassleitung (64) zum Ableiten von Gas aus dem Tankanschlussraum (30) bildet,
- ein Notfall-Druckablassventil (34), das über eine Sicherheitsventilleitung (36) zwischen dem Gasraum (38) des Kraftstofftanks (20) und dem Abblasemast (40) angeschlossen ist,
- eine Verbindung (74, 76; 80, 82) zu einer Inertgasquelle (72; 78) zum Inertisieren des Tankanschlussraums (30),
wobei die Kraftstofftankanordnung ferner eine erste Wasserstoffauslassleitung (92) umfasst, die in dem Abblasemast (40) gesondert von der Lüftungsauslassleitung (64) bereitgestellt wird, wobei sich die erste Wasserstoffauslassleitung (92) von dem unteren Ende des Abblasemasts (40) aus bis zu dem oberen Ende (102) desselben erstreckt und in Durchflussverbindung mit dem Notfall-Druckablassventil (34) angeordnet ist.

2. Kraftstofftankanordnung nach Anspruch 1, **dadurch gekennzeichnet, dass** die erste Wasserstoffauslassleitung (92) von der Lüftungsauslassleitung (64) umgeben ist.

3. Kraftstofftankanordnung nach Anspruch 1 oder 2, **dadurch gekennzeichnet, dass** die erste Wasserstoffauslassleitung (92) in Durchflussverbindung mit mindestens einer von der Leitung (44, 46), die Wasserstoff in den Kraftstofftank (20) einleitet, der Leitung (88), die flüssigen Wasserstoff aus dem Kraftstofftank (20) entnimmt, und der Leitung (94), die gasförmigen Wasserstoff weiterleitet, angeordnet ist.

4. Kraftstofftankanordnung nach einem der vorhergehenden Ansprüche, **dadurch gekennzeichnet, dass** eine zweite Wasserstoffauslassleitung (98) in dem Abblasemast (40) gesondert von der Lüftungsauslassleitung (64) und der ersten Wasserstoffauslassleitung (92) bereitgestellt wird, wobei sich die zweite Wasserstoffauslassleitung (98) von dem unteren Ende des Abblasemasts (40) aus bis zu dem oberen Ende (102) desselben erstreckt und in Durchflussverbindung mit mindestens einer Leitung (94), die gasförmigen Wasserstoff weiterleitet, angeordnet ist.

5. Kraftstofftankanordnung nach einem der vorhergehenden Ansprüche, **dadurch gekennzeichnet, dass** der Abblasemast (40) mit einer Verschlussplatte (104) versehen ist, welche die Lüftungsauslassleitung (64) in dem Abblasemast (40) in einen unteren Teil (64') und einen oberen Teil (64") teilt.

6. Kraftstofftankanordnung nach Anspruch 5, **dadurch gekennzeichnet, dass** der Abblasemast (40) mit einem Abzweigrohr (106) versehen ist, wobei das Abzweigrohr (106) über ein Lüftungsabsperrventil (64) eine Durchflussverbindung von dem unteren Teil (64') der Lüftungsauslassleitung (64) unterhalb der Verschlussplatte (104) zu dem oberen Teil (64") derselben bildet.

7. Kraftstofftankanordnung nach Anspruch 6, **dadurch gekennzeichnet, dass** das Abzweigrohr (106) mit einem Verschlussventil (84) und einem Druck-/Vakuumventil (86) versehen ist, wobei die zwei Ventile (84, 86) in Reihe angeordnet sind und eine Durchflussverbindung von dem Abzweigrohr (106) und dem unteren Teil (64') der Lüftungsauslassleitung (64) zur freien Luft bereitstellen.

8. Kraftstofftankanordnung nach einem der vorhergehenden Ansprüche, **dadurch gekennzeichnet, dass** ein Temperatursensor (112) an der ersten Wasserstoffauslassleitung (92) oder an der Sicherheitsventilleitung (36) bereitgestellt wird.

9. Kraftstofftankanordnung nach einem der vorhergehenden Ansprüche, **dadurch gekennzeichnet, dass** die Inertgasquelle (72; 78) zu einer Stickstoffanlage (70) gehört, die eine Stickstoffanlage (70') mit hoher Kapazität und eine Stickstoffanlage (70") mit niedriger Kapazität umfasst.

10. Kraftstofftankanordnung nach einem der vorhergehenden Ansprüche, **dadurch gekennzeichnet, dass** der Kraftstofftank (20) von zwei Schalen (22 und 24) und einem Hohlraum zwischen denselben gebildet wird, wobei die erste Wasserstoffauslassleitung (92) in Durchflussverbindung mit der Leitung (90) angeordnet ist, die Wasserstoff aus dem Hohlraum (26) zwischen den Schalen des Kraftstofftanks (20) sammelt.

11. Kraftstofftankanordnung nach einem der vorhergehenden Ansprüche, **dadurch gekennzeichnet, dass** die erste Wasserstoffauslassleitung (92) über das Notfall-Druckablassventil (34) in Durchflussverbindung mit der Sicherheitsventilleitung (36) angeordnet ist, die Wasserstoff aus dem Gasraum (38) des Kraftstofftanks (20) sammelt.

12. Verfahren zum Ablassen von Wasserstoff aus einer Kraftstofftankanordnung (12) für flüssigen Wasserstoff nach einem der vorhergehenden Ansprüche, wobei das Verfahren, wenn das Notfall-Druckentlastungsventil öffnet und ermöglicht, dass Wasserstoff in der ersten Wasserstoffauslassleitung (92) ausströmt, die folgenden Schritte umfasst:
a) Öffnen des mindestens einen Lüftungsauslassventils (66),
b) Öffnen einer Durchflussverbindung von einer Stickstoffanlage (70') mit hoher Kapazität zu dem Tankanschlussraum (30),
c) Ermöglichen, dass der Stickstoff entlang der Lüftungsauslassleitung (64) zu dem oberen Ende (102) des Abblasemasts (40) strömt,
d) Ableiten von Wasserstoff aus der ersten Wasserstoffauslassleitung (92) in eine Stickstoffatmosphäre, die das obere Ende der ersten Wasserstoffauslassleitung (92) umgibt.

13. Verfahren nach Anspruch 12, **gekennzeichnet durch** das gleichzeitige Durchführen der Schritte a), b) und c).

14. Verfahren nach Anspruch 12, **gekennzeichnet durch**, vor Schritt a), das Erfassen von Temperaturinformationen von einem Temperatursensor (112) und, falls die Temperatur unterhalb eines vorbestimmten Wertes liegt, das Durchführen der Schritte a) bis einschließlich d).

15. Verfahren nach Anspruch 12, **gekennzeichnet durch**, in Schritt c), das Öffnen einer Durchflussverbindung über mindestens eines der Ventile (74 und 76) zu mindestens einem von der Lüftungseinlassleitung (56) und dem Tankanschlussraum (30).

## Revendications

1. Ensemble de réservoir à carburant pour un bateau destiné à stocker de l'hydrogène liquide, l'ensemble de réservoir à carburant comprenant
a) un réservoir à carburant pour hydrogène liquide (20) comportant un espace à gaz (38),
b) un espace de raccordement de réservoir (30) disposé en communication avec le réservoir à carburant pour hydrogène liquide (20),
c) l'espace de raccordement de réservoir (30) étant doté
- de raccords (42, 44, 46) permettant de remplir le réservoir à carburant (20) avec de l'hydrogène liquide,
- de raccords (88) permettant de prélever de l'hydrogène liquide à partir du réservoir à carburant (20),
- d'un évaporateur (50) permettant d'évaporer l'hydrogène liquide,
- de raccords (94, 48) permettant d'alimenter l'hydrogène évaporé comme carburant vers une unité de puissance consommant de l'hydrogène,
- une ligne d'entrée de ventilation (56),
- un mât d'évent (40) comportant une extrémité inférieure et une extrémité supérieure (102), et un intérieur, l'intérieur du mât d'évent (40) formant une ligne de sortie de ventilation (64) permettant de décharger du gaz à partir de l'espace de raccordement de réservoir (30),
- une soupape de décompression d'urgence (34) accouplée par le biais d'une ligne de soupape de sécurité (36) entre l'espace à gaz (38) du réservoir à carburant (20) et le mât d'évent (40),
- un raccord (74, 76 ; 80, 82) vers une source de gaz inerte (72 ; 78) pour l'inertage de l'espace de raccordement de réservoir (30),
dans lequel l'ensemble de réservoir à carburant comprend en outre une première ligne de sortie d'hydrogène (92) disposée dans le mât d'évent (40) séparément de la ligne de sortie de ventilation (64), la première ligne de sortie d'hydrogène (92) s'étendant à partir de l'extrémité inférieure du mât d'évent (40) vers une extrémité supérieure (102) de celui-ci et disposée en communication fluidique avec la soupape de décompression d'urgence (34).

2. Ensemble de réservoir à carburant selon la revendication 1, **caractérisé en ce que** la première ligne de sortie d'hydrogène (92) est entourée par la ligne de sortie de ventilation (64).

3. Ensemble de réservoir à carburant selon la revendication 1 ou 2, **caractérisé en ce que** la première ligne de sortie d'hydrogène (92) est disposée en communication fluidique avec l'une au moins parmi la ligne (44, 46) d'introduction d'hydrogène liquide dans le réservoir à carburant (20), la ligne (88) de prélèvement d'hydrogène liquide à partir du réservoir à carburant (20) et la ligne (94) de transfert d'hydrogène gazeux.

4. Ensemble de réservoir à carburant selon l'une quelconque des revendications précédentes, **caractérisé par** une deuxième ligne de sortie d'hydrogène (98) disposée dans le mât d'évent (40) séparément de la ligne de sortie de ventilation (64) et de la première ligne de sortie d'hydrogène (92), la deuxième ligne de sortie d'hydrogène (98) s'étendant à partir de l'extrémité inférieure du mât d'évent (40) vers l'extrémité supérieure (102) de celui-ci et disposée en communication fluidique avec au moins une ligne (94) de transfert d'hydrogène gazeux.

5. Ensemble de réservoir à carburant selon l'une quelconque des revendications précédentes, **caractérisé en ce que** le mât d'évent (40) est doté d'une plaque de fermeture (104) divisant la ligne de sortie de ventilation (64) dans le mât d'évent (40) en une partie inférieure (64') et une partie supérieure (64").

6. Ensemble de réservoir à carburant selon la revendication 5, **caractérisé en ce que** le mât d'évent (40) est doté d'un tuyau de dérivation (106), le tuyau de dérivation (106) formant une liaison fluidique entre la partie inférieure (64') de la ligne de sortie de ventilation (64) sous la plaque de fermeture (104) et la partie supérieure (64") de celle-ci par le biais d'une soupape d'arrêt de ventilation (64).

7. Ensemble de réservoir à carburant selon la revendication 6, **caractérisé en ce que** le tuyau de dérivation (106) est doté d'une soupape de fermeture (84) et d'une soupape pression/vide (86), les deux soupapes (84, 86) étant disposées en série et assurant une liaison fluidique entre le tuyau de dérivation (106) et la partie inférieure (64') de la ligne de sortie de ventilation (64) vers l'air libre.

8. Ensemble de réservoir à carburant selon l'une quelconque des revendications précédentes, **caractérisé par** un capteur de température (112) disposé sur la première ligne de sortie d'hydrogène (92) ou sur la ligne de soupape de sécurité (36).

9. Ensemble de réservoir à carburant selon l'une quelconque des revendications précédentes, **caractérisé en ce que** la source de gaz inerte (72 ; 78) appartient à un système d'azote (70) comprenant un système d'azote à haute capacité (70') et un système d'azote à faible capacité (70").

10. Ensemble de réservoir à carburant selon l'une quelconque des revendications précédentes, **caractérisé en ce que** le réservoir à carburant (20) est constitué de deux coques (22 et 24) et d'une cavité intermédiaire, la première ligne de sortie d'hydrogène (92) étant disposée en communication fluidique avec la ligne (90) de collecte d'hydrogène à partir de la cavité (26) entre les coques du réservoir à carburant (20).

11. Ensemble de réservoir à carburant selon l'une quelconque des revendications précédentes, **caractérisé en ce que** la première ligne de sortie d'hydrogène (92) est disposée en communication fluidique avec la ligne de soupape de sécurité (36) collectant de l'hydrogène à partir de l'espace à gaz (38) du réservoir à carburant (20) par le biais de la soupape de décompression d'urgence (34).

12. Procédé de décharge d'hydrogène à partir d'un ensemble de réservoir à carburant pour hydrogène liquide (12) selon l'une quelconque des revendications précédentes, le procédé comprenant les étapes suivantes, lorsque la soupape de décompression d'urgence s'ouvre et permet à l'hydrogène de s'échapper dans la première ligne de sortie d'hydrogène (92) :
a) ouverture de l'au moins une soupape de sortie de ventilation (66),
b) ouverture d'une communication fluidique d'un système d'azote à haute capacité (70') vers l'espace de raccordement de réservoir (30),
c) écoulement du flux d'azote le long de la ligne de sortie de ventilation (64) vers l'extrémité supérieure (102) du mât d'évent (40),
d) décharge d'hydrogène à partir de la première ligne de sortie d'hydrogène (92) vers l'atmosphère d'azote entourant l'extrémité supérieure de la première ligne de sortie d'hydrogène (92).

13. Procédé selon la revendication 12, caractérisé l'exécution simultanée des étapes a), b) et c).

14. Procédé selon la revendication 12, **caractérisé par**, avant l'étape a), l'enregistrement d'une information de température fournie par un capteur de température (112), et, dans le cas où la température est inférieure à une valeur prédéterminée, l'exécution des étapes a) à d) .

15. Procédé selon la revendication 12, **caractérisé par**, dans l'étape c), l'ouverture d'une communication fluidique par le biais de l'une au moins parmi des soupapes (74 et 76) vers l'un au moins parmi la ligne d'entrée de ventilation (56) et l'espace de raccordement de réservoir (30).
